# EUROPÄISCHE PATENTSCHRIFT

(11) **EP 3 107 111 B1**
(45) Veröffentlichungstag und Bekanntmachung des Hinweises auf die Patenterteilung: **27.12.2017**
(21) Anmeldenummer: 15172143.8
(22) Anmeldetag: 15.06.2015
(51) Int. Cl.: H01H 23/14, H02G 3/12

(54) **SOCKELTEIL FÜR EINE MODULARE ELEKTRISCHE SCHALTERVORRICHTUNG**
BASE SECTION FOR A MODULAR ELECTRICAL SWITCHING DEVICE
PARTIE DE SOCLE POUR UN DISPOSITIF DE COMMUTATEUR MODULAIRE ELECTRIQUE

(43) Veröffentlichungstag der Anmeldung: 21.12.2016
(73) Patentinhaber: GIRA GIERSIEPEN GmbH & Co. KG, 42477 Radevormwald (DE)
(72) Erfinder: VOLE, Andreas, 51688 Wipperfürth (DE); LANKUTTIS, Klaus, 51465 Bergisch-Gladbach (DE); KALINKE, Jens, 42499 Hückeswagen (DE)
(74) Vertreter: Patent- und Rechtsanwälte Dr. Solf & Zapf

(56) Entgegenhaltungen:
- EP-A1- 1 930 927
- DE-B3-102007 045 578
- DE-U1- 29 901 692
- FR-A1- 2 735 273

## Beschreibung

Die Erfindung betrifft ein Sockelteil für eine elektrische Schaltervorrichtung zur Montage in einer Montageebene einer Montageöffnung oder eines Tragrings, umfassend ein Sockeloberteil und ein Sockelunterteil, mindestens zwei elektrisch leitende, als Steckklemmen ausgebildete Kontaktelemente zum Anschließen jeweils eines Endabschnitts eines elektrischen Leiters, mindestens eine Schaltwippe zur Erzeugung einer mechanischen Schaltbewegung und mindestens eine Kontaktwippe zur elektrischen Kontaktierung der Kontaktelemente, wobei Sockeloberteil und Sockelunterteil miteinander lösbar verbunden sind, und wobei mittels der Schaltwippe die Kontaktwippe zwischen einem ersten und einem zweiten Schaltzustand umschaltbar ist, wobei die Schaltwippe in dem Sockeloberteil angeordnet ist, und wobei die Kontaktwippe derart mittels eines Wippenlagers in dem Sockelunterteil schwenkbar gelagert ist, dass ihre Schwenkachse in einer senkrecht zu der Montagerichtung und parallel zu der Montageebene verlaufenden Ebene verläuft, wobei Kontaktaufnahmen in dem Sockelunterteil in einem Raster in mindestens zwei zueinander parallel verlaufenden und zueinander fluchtenden Reihen in einer ersten, senkrecht zur Montagerichtung verlaufenden Kontaktebene angeordnet sind, und wobei die in einer Reihe angeordneten Kontaktaufnahmen einen Rasterabstand aufweisen, der derart bemessen ist, dass drei Kontaktaufnahmen in einer Reihe nebeneinander in dem Sockelunterteil anordbar sind. Zudem betrifft die Erfindung eine Schaltervorrichtung mit einem derartigen Sockelteil.

Sockelteile für elektrische Schaltervorrichtungen sind in vielfachen Ausführungsformen bekannt. Als ein Beispiel wird auf das Dokument DE 20 2011 051797 U1 verwiesen, in dem eine Schaltervorrichtung mit einem Sockelteil beschrieben ist.

Aus der DE 299 01 692 U1 ist eine Schaltervorrichtung und ein Sockelteil bekannt, bei der die Leiter in einem 90° Einsteckwinkel zur Montagerichtung in das Sockelunterteil eingeführt werden. Dies hat den Nachteil, dass beim Einbau der Schaltervorrichtung die Leiter um 90° nach hinten gebogen werden und unter Umständen zwischen seitlicher Wand der Montageöffnung und einer des Sockelteils Befestigungskralle eingeklemmt werden.

Die FR 2 735 273 A1 beschreibt eine Schaltervorrichtung, bei der die Kontaktwippe derart mittels eines Wippenlagers in dem Sockelunterteil schwenkbar gelagert ist, dass ihre Schwenkachse in einer senkrecht zu der Montagerichtung und parallel zu der Montageebene verlaufenden Ebene verläuft. Die Kontaktwippe ist als Kontaktelement ausgebildet und zwischen zwei weiteren sich gegenüberliegenden Kontaktelementen angeordnet.

Die EP 1 930 927 A1 offenbart ebenfalls eine Schaltervorrichtung, bei der die Kontaktwippe derart mittels eines Wippenlagers in dem Sockelunterteil schwenkbar gelagert ist, dass ihre Schwenkachse in einer senkrecht zu der Montagerichtung und parallel zu der Montageebene verlaufenden Ebene verläuft. Die Kontaktwippe ist zwischen zwei sich gegenüberliegenden Kontaktelementen angeordnet. Die Kontaktelemente sind als Schraubklemmen ausgebildet. Hierbei werden die Leiter in einem 90° Einsteckwinkel zur Montagerichtung in das Sockelunterteil eingeführt.

Die DE 10 2007 045 578 B3 offenbart eine weitere Schaltervorrichtung, bei der die Kontaktwippe derart mittels eines Wippenlagers in dem Sockelunterteil schwenkbar gelagert ist, dass ihre Schwenkachse in einer senkrecht zu der Montagerichtung und parallel zu der Montageebene verlaufenden Ebene verläuft. Auch hier ist die Kontaktwippe zwischen zwei sich gegenüberliegenden Kontaktelementen angeordnet.

Bekannte Sockelteile werden je nach Schaltungstyp, Montageart und Verbindungsart der elektrischen Leiter an die bestimmten Anforderungen angepasst. Verschiedenen Schaltungstypen sind zum Beispiel Ein/Aus-Schalter, Wechsel-Schalter, Serien-Schalter, Gruppen-Schalter, Kreuz-Schalter und Wechsel-Wechsel-Schalter und -Taster. Zudem kann eine unterschiedliche Anzahl von unabhängigen Schaltermechanismen in einem Sockelteil vorhanden sein, so dass zum Beispiel 1-fach, 2-fach oder 3-fach Schaltervorrichtungen ermöglicht werden. Zusätzlich unterscheiden sich Schaltervorrichtungen durch unterschiedliche Betätigungsmechanismen, wie zum Beispiel Umschalter oder Tastschalter. Außerdem sind auch verschiedene Befestigungsmittel für die Montage möglich, so zum Beispiel eine Befestigung mittels Schraub-Krallen in Unterputz-Dosen oder Hohlwand-Dosen oder eine Befestigung mittels Rastmitteln in Tragringen.

Daraus ergibt sich eine Vielzahl von unterschiedlichen Schaltervorrichtungen, die zusammen mit ihren Bauteilen und der Verschaltung jeweils für den speziellen Schaltertyp und die spezielle Ausführungsform angepasst werden. Dies führt insbesondere zu einer Vielzahl von unterschiedlich hergestellten Sockelteilen, Kontaktelementen, Kontaktwippen und Schaltwippen. Die große Anzahl von unterschiedlichen Bauteilen erschwert die Herstellung und verursacht relativ hohe Herstellungskosten, da viele verschiedene Bauteile in relativ kleinen Stückzahlen hergestellt und gelagert werden, und die Automatisierungstechnik zur Herstellung eines bestimmten Schaltertyps und Ausführungsform an die verschiedenen Bauteile angepasst wird.

Der Erfindung liegt die Aufgabe zugrunde, eine Schaltervorrichtung und insbesondere ein Sockelteil für eine Schaltervorrichtung zur Verfügung zu stellen, mit dem möglichst viele verschiedene Schaltertypen und Ausführungsformen von Schaltervorrichtungen mit möglichst vielen gleichen Bauteilen hergestellt werden können.

Die Aufgabe wird erfindungsgemäß durch ein Sockelteil gemäß dem kennzeichnenden Teil des Anspruchs 1 und gemäß einer Schaltervorrichtung gemäß Anspruch 21 gelöst.

Erfindungsgemäß sind demnach die Kontaktelemente derart in dem Sockelunterteil ausgebildet und angeordnet, dass die Endabschnitte der elektrischen Leiter mit einem Einsteckwinkel in einem Bereich von 0° bis 45° in einer Richtung entgegengesetzt zu einer Montagerichtung in die Kontaktelemente einführbar sind. Dies ermöglicht eine einheitliche Einsteckrichtung für alle anzuschließenden Leiter, wodurch die Leiter alle parallel nebenaneinander angeordnet und angeschlossen werden können. Dadurch kann der benötigte Anschlussraum optimal an dem Sockelteil verteilt werden. Die Schaltwippe ist in dem Sockeloberteil angeordnet, wobei die Kontaktwippe derart in dem Sockelunterteil schwenkbar gelagert ist, dass ihre Schwenkachse in einer senkrecht zu der Montagerichtung und parallel zu der Montageebene verlaufenden Ebene verläuft. Eine derartige liegende Anordnung der Kontaktwippe ermöglicht eine besonders platzsparende Integration der Kontaktwippe in dem Sockelteil. Eine derartige Anordnung von Schaltwippe im Sockeloberteil und Kontaktwippe im Sockelunterteil ermöglicht zudem, unterschiedliche Mechanismen, wie sie zum Beispiel für Umschalter und Tastschalter benötigt werden, lediglich durch verschiedene Sockeloberteile und entsprechend verschiedene Schaltwippen zu realisieren, wobei die Sockelunterteile mit den Kontaktelementen und den Kontaktwippen für die unterschiedlichen Mechanismen nicht verändert werden.

Dadurch dass die Kontaktaufnahmen in dem Sockelunterteil in einem Raster in mindestens zwei zueinander parallel verlaufenden und zueinander fluchtenden Reihen in einer ersten, senkrecht zur Montagerichtung verlaufenden Kontaktebene angeordnet sind, und die in einer Reihe angeordneten Kontaktaufnahmen einen Rasterabstand aufweisen, der derart bemessen ist, dass drei Kontaktaufnahmen in einer Reihe nebeneinander in dem Sockelunterteil anordbar sind, wird ein einfaches Montieren der Kontaktelemente in dem Sockelunterteil ermöglicht. Durch einen derartigen Rasterabstand der Kontaktaufnahmen wird ein Rastermaß festgelegt, so dass bis zu sechs Kontaktelemente an dem Sockelunterteil möglichst platzsparend anordbar sind. Dies ermöglicht eine besonders große Vielzahl von verschiedenen Schaltertypen mit bis zu 6 Kontakten mit gleichen Bauteilen, insbesondere mit dem gleichen Sockelunterteil, den gleichen Kontaktwippen und/oder den gleichen Kontaktelementen herzustellen.

In einer weiteren Ausführungsform weisen die beiden Reihen in der ersten Kontaktebene einen Reihenabstand zueinander auf, der derart bemessen ist, dass zwischen den beiden Reihen mindestens eine dritte, parallele und mit den anderen Reihen fluchtenden Reihe in einer zweiten, parallel in Montagerichtung hinter der ersten Kontaktebene liegenden zweiten Kontaktebene anordbar ist, wobei sich die Kontaktaufnahmen der drei Reihen in einer in Montagerichtung aufeinander projizierten Ebene nicht überdecken. Durch einen derartigen Reihenabstand der Reihen der Kontaktaufnahmen wird das Rastermaß weiter festgelegt, so dass bis zu neun Kontaktelemente an dem Sockelunterteil möglichst platzsparend anordbar sind. Dies ermöglicht eine noch größere Vielzahl von verschiedenen Schaltertypen mit bis zu 9 Kontakten mit gleichen Bauteilen, insbesondere mit dem gleichen Sockelunterteil, den gleichen Kontaktwippen und/oder den gleichen Kontaktelementen herzustellen.

Weitere vorteilhafte Ausführungsformen der Erfindung ergeben sich aus der folgenden Figurenbeschreibung und aus den Unteransprüchen.

Es zeigen:
- Fig. 1: eine dreidimensionale Explosionszeichnung einer Schaltervorrichtung als 1-fach Wechsel-Schalter mit 3 Kontakten mit einer ersten Ausführungsform eines erfindungsgemäßen Sockelteils,
- Fig. 2a, 2b, 2c: verschiedene Ansichten einer ersten Ausführungsform eines Sockelunterteils für eine Schaltervorrichtung als 1-fach Wechselschalter mit 3 Kontakten mit einem Betätigungselement,
- Fig. 2d: eine Rückansicht entgegen der Montagerichtung Z-Z' der ersten Ausführungsform eines Sockelunterteils gemäß Fig. 2a, 2b, 2c,
- Fig. 3a, 3b, 3c: verschiedene Ansichten einer zweiten Ausführungsform eines Sockelunterteils für eine Schaltervorrichtung 3-fach Ein/Aus-Schalter mit 6 Kontakten mit drei Betätigungselementen,
- Fig. 4a, 4b, 4c: verschiedene Ansichten einer dritten Ausführungsform eines Sockelunterteils für eine Schaltervorrichtung als 2-fach Wechsel-Wechsel-Schalter mit 6 Kontakten,
- Fig. 5a, 5b, 5c: verschiedene Ansichten einer vierten Ausführungsform eines Sockelunterteils für eine Schaltervorrichtung als 3-fach Wechsel-Wechsel-Schalter mit 9 Kontakten mit drei Betätigungselementen.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

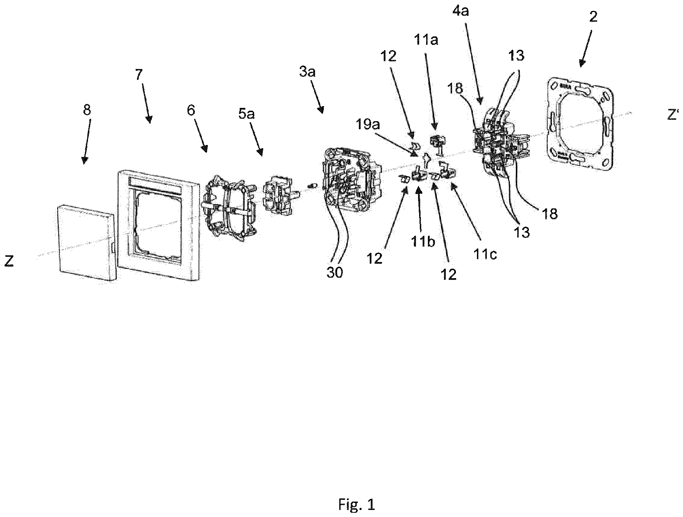

In Fig. 1 ist eine Schaltervorrichtung als 1-fach Wechsel-Schalter mit 3 Kontakten mit einer ersten Ausführungsform eines erfindungsgemäßen Sockelteils dargestellt. Die Schaltervorrichtung ist für eine Montage in einer nicht dargestellten Montageöffnung einer Montagewand ausgebildet. Insbesondere wird die Montageöffnung durch eine in die Montagewand eingesetzte übliche Unterputzdose oder Hohlwanddose gebildet. Die Montageöffnung bildet eine parallel zur Montagewand verlaufende Montageebene. Die Größe der Montageöffnung ist durch länderspezifische Normen fest vorgegeben, und der Einbauraum begrenzt.

Die Schaltervorrichtung gemäß Fig.1 umfasst ein Sockelteil, aufweisend ein Sockeloberteil 3a, 3b, ein Sockelunterteil 4a, 4b, 4c, 4d und eine Schaltwippe 5a, 5b, einen Tragring 2 und mindestens ein Betätigungselement 8.

Je nach Schaltertyp können auch zwei oder drei Betätigungselemente 8 nebeneinander in einer Schaltervorrichtung angeordnet sein. Dadurch lassen sich zwei oder drei elektrische Schaltkreise unabhängig voneinander betätigen.

Die Montagerichtung Z-Z' der Schaltervorrichtung verläuft senkrecht zur Montageebene von dem Betätigungselement 8 in Richtung zum Sockelunterteil 4a, 4b, 4c, 4d.

Insbesondere umfasst die dargestellte Ausführungsform der Schaltervorrichtung gemäß Fig. 1 einen Rahmenkörper 7 mit einer Deckfläche, der das Betätigungselement 8 zumindest bereichsweise randseitig umgibt, wobei das Betätigungselement 8 mit dem Rahmenkörper 7 ausrichtbar zum Rahmenkörper 7 verbunden ist und wobei der Rahmenkörper 7 für einen Tapetenausgleich, d. h. zur Schließung eines Zwischenraums zwischen dem Rahmenkörper 7 und einer Wand oder einer Tapete, mittels eines Klemmstücks 6 unterschiedlich tief in das Sockelteil einsteckbar und dort fixierbar ist.

Das Sockelunterteil 4a, 4b, 4c, 4d weist insbesondere an seinem Umfang Feststellmittel zur Montage der Schaltervorrichtung in der Montageöffnung auf. Die Feststellmittel sind vorteilhafterweise als zwei an sich gegenüberliegenden Seiten des Sockelunterteils 4a, 4b, 4c, 4d angeordnete Krallen ausgebildet. Zur Befestigung der Krallen weist das Sockelunterteil 4a, 4b, 4c, 4d zwei sich an seinem Umfang gegenüberliegende Krallenaufnahmen 10 auf. Die Krallen sind im zusammengesetzten Zustand mittels einer Krallenschraube in der Krallenaufnahme 10 gehalten. Durch ein Anziehen der Krallenschraube fährt die Kralle 9 aus der Krallenaufnahme 10 heraus und klemmt die Schaltervorrichtung in der Montageöffnung fest.

Alternativ oder zusätzlich kann in einer vorteilhaften Ausführungsform das Sockelunterteil 4a, 4b, 4c, 4d oder das Sockeloberteil 3a, 3b Rastmittel zur Befestigung der Schaltervorrichtung an dem Tragring 2 aufweisen.

Das erfindungsgemäße Sockelteil der Schaltervorrichtungen ist insbesondere senkrecht zur Montagerichtung Z-Z in das Sockeloberteil 3a, 3b und das Sockelunterteil 4a, 4b, 4c, 4d unterteilt. In dem Sockeloberteil 3a, 3b ist die Schaltwippe 5a, 5b für jedes vorhandene Betätigungselement 8 entsprechend angeordnet. Das Sockeloberteil 3a, 3b und das Sockelunterteil 4a, 4b, 4c, 4d sind im zusammengesetzten Zustand des Sockelteils vorteilhafterweise über Verbindungsmittel 9, insbesondere über Rastmittel, lösbar miteinander verbunden. Sockeloberteil 3a, 3b und Sockelunterteil 4a, 4b, 4c, 4d sind aus einem nicht elektrisch leitenden Material ausgebildet.

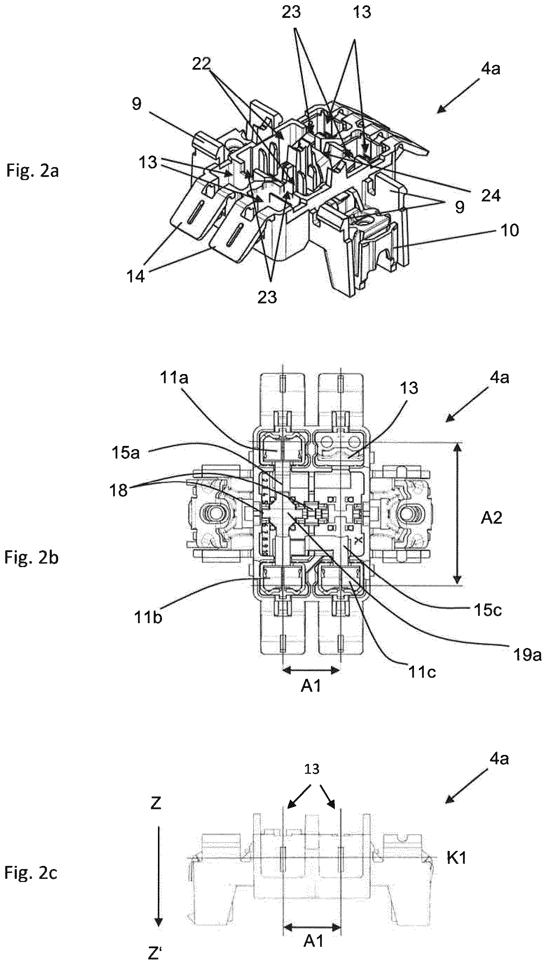

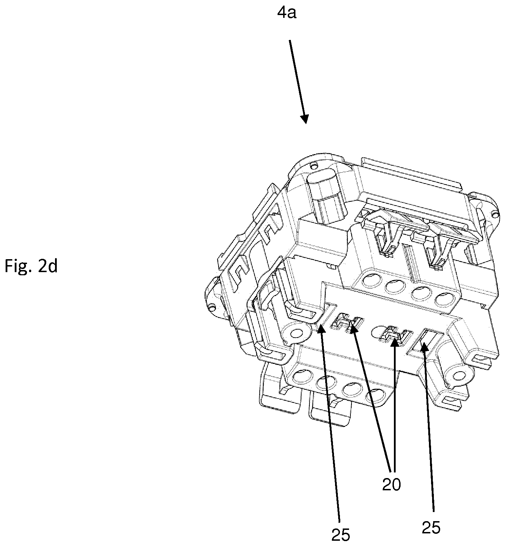

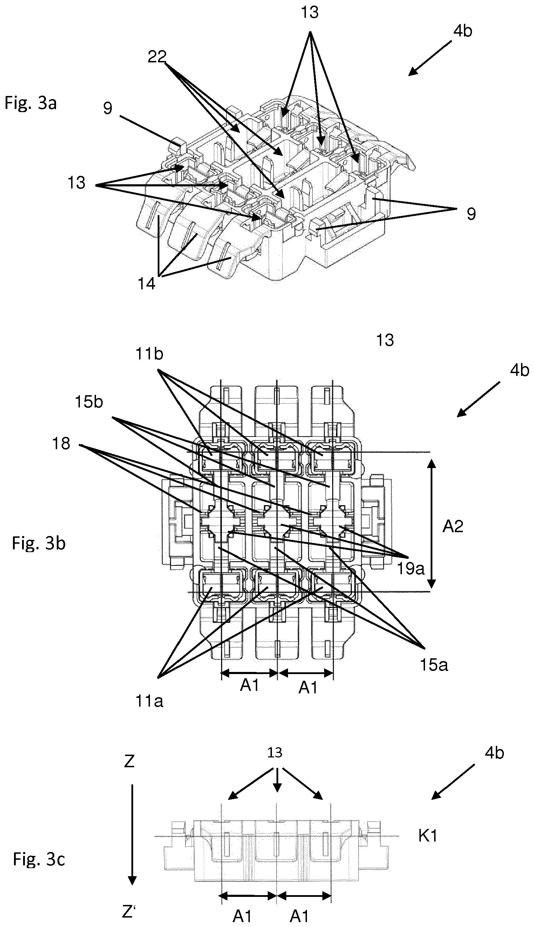

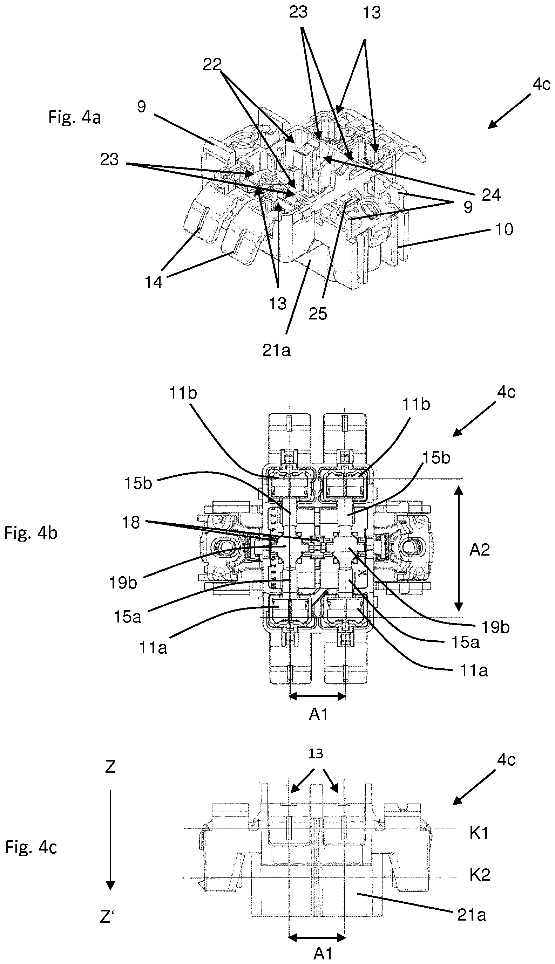

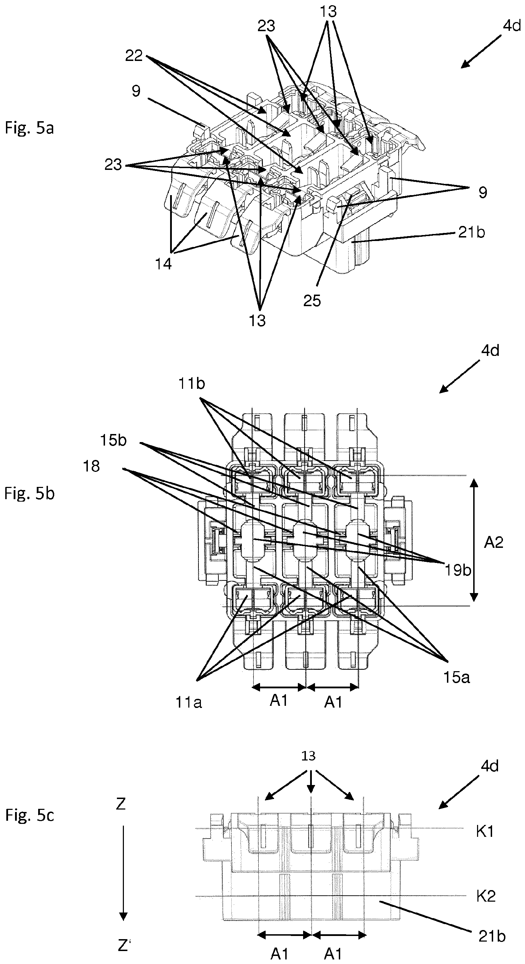

In Fig. 2a, 2b, 2c, 2d, Fig. 3a, 3b, 3c, Fig. 4a, 4b, 4c und Fig. 5a, 5b, 5c sind verschiedene erfindungsgemäße Ausführungsformen von Sockelunterteilen 4a, 4b, 4c, 4d für Sockelteile von verschiedenen Schaltertypen abgebildet.

Das Sockelunterteil 4a, 4b, 4c, 4d weist erfindungsgemäß mehrere Kontaktelemente 11a, 11b, 11c zur Befestigung jeweils eines Endabschnitts eines anzuschließenden elektrischen Leiters und zur Bildung der elektrischen Schaltung der Schaltervorrichtung auf. Die Kontaktelemente 11a, 11b, 11c sind derart ausgebildet und in dem Sockelunterteil 4a, 4b, 4c, 4d angeordnet, dass die Endabschnitte der elektrischen Leiter in einer Richtung entgegengesetzt zur Montagerichtung Z-Z' in die Kontaktelemente 11a, 11b, 11c einführbar sind. Die Kontaktelemente 11a, 11b, 11c sind insbesondere als Steckklemmen oder als Schraubklemmen ausgebildet.

In den dargestellten Ausführungsformen sind die Kontaktelemente 11a, 11b, 11c insbesondere als Steckklemmen ausgebildet. Die Kontaktelemente 11a, 11b, 11c weisen insbesondere ein fünf-seitig geschlossenes quaderförmiges Kästchen als Grundkörper auf. In einer vorteilhaften Ausführungsform sind die Kontaktelemente 11a, 11b, 11c als Stanzbiegeteile aus Metall hergestellt. Die Kontaktelemente 11a, 11b, 11c weisen an einem Boden des Grundkörpers jeweils mindestens eine Einführöffnung zum Einführen des Endabschnittes des elektrischen Leiters auf. Zudem weisen die Kontaktelemente 11a, 11b, 11c an ihrem Außenumfang einseitig einen Kontaktarm 15a, 15b, 15c zur Kontaktierung einer Kontaktwippe 19a, 19b innerhalb des Sockelunterteils 4a, 4b, 4c, 4d auf. Der Kontaktarm 15 der Kontaktelemente 11a, 11b, 11c kann je nach gewünschter Verschaltung eines Schaltertyps unterschiedlich ausgebildet sein, wobei der Grundkörper der Kontaktelemente 11a, 11b, 11c immer gleich ausgebildet ist.

Insbesondere sind die Kontaktarme 15a, 15b, 15c der verschiedenen Ausführungsformen der Kontaktelemente 11a, 11b, 11c derart ausgebildet, dass sie einen Polkontakt 11a, einen Auskontakt 11b, einen Wechselkontakt 11c, einen Serienkontakt, einen Kreuzkontakt oder einen Nullkontakt zur Kontaktierung mit der Kontaktwippe 19a, 19b in einem der beiden Schaltzustände bilden.

Bei dem Polkontakt 11a wird die Kontaktwippe 19a, 19b derart kontaktiert, dass der Kontaktarm 15a des Kontaktelementes 11a unabhängig von dem Schaltzustand immer mit der Kontaktwippe 19a, 19b kontaktiert ist. Dazu verläuft der Kontaktarm 15a insbesondere vom Kontaktelement 11a zum Drehpunkt beziehungsweise Scheitelpunkt der Kontaktwippe 19a, 19b.

Bei einem Auskontakt 11b wird die Kontaktwippe 19a, 19b derart kontaktiert, dass der Kontaktarm 15b des Kontaktelementes 11b in einem ersten Schaltzustand mit der Kontaktwippe 19a, 19b kontaktiert ist. Dazu verläuft der Kontaktarm 15b insbesondere vom Kontaktelement 11b zu einem Endbereich eines Wippenarms der Kontaktwippe 19a, 19b in dem ersten Schaltzustand, insbesondere zu der Oberseite des Endbereichs des Wippenarms der Kontaktwippe 19a, 19b.

Bei einem Wechselkontakt 11c wird die Kontaktwippe 19a, 19b derart kontaktiert, dass der Kontaktarm 15c des Kontaktelementes 11c in einem zweiten Schaltzustand mit der Kontaktwippe 19a, 19b kontaktiert ist. Dazu verläuft der Kontaktarm 15c insbesondere vom Kontaktelement 11c zu dem Endbereich eines Wippenarms der Kontaktwippe 19a, 19b in dem zweiten Schaltzustand, insbesondere zu der Unterseite des Endbereichs des Wippenarms der Kontaktwippe 19a, 19b.

Bei dem nicht dargestellten Serienkontakt werden zwei nebeneinander angeordnete Kontaktwippen 19a, 19b derart kontaktiert, dass der Kontaktarm des Kontaktelementes in einem ersten Schaltzustand beider Kontaktwippen 19a, 19b mit diesen kontaktiert ist. Dazu verläuft der Kontaktarm insbesondere vom Kontaktelement zu beiden Endbereichen beider Wippenarme der Kontaktwippen 19a, 19b in dem ersten Schaltzustand, insbesondere zu der jeweiligen Oberseite des Endbereichs des Wippenarms der jeweiligen Kontaktwippe 19a, 19b.

Bei dem nicht dargestellten Kreuzkontakt werden zwei nebeneinander angeordnete Kontaktwippen 19a, 19b derart kontaktiert, dass der Kontaktarm des Kontaktelementes in einem ersten Schaltzustand die erste Kontaktwippe 19a, 19b und in einem zweiten Schaltzustand die zweite Kontaktwippe 19a, 19b kontaktiert. Dazu verläuft der Kontaktarm insbesondere vom Kontaktelement zu einem Endbereich eines Wippenarmes der ersten Kontaktwippe 19a, 19b in dem ersten Schaltzustand, insbesondere zu der Oberseite des Endbereichs des Wippenarms der ersten Kontaktwippe 19a, 19b und vom Kontaktelement zu einem Endbereich eines Wippenarmes der zweiten Kontaktwippe 19a, 19b in dem zweiten Schaltzustand, insbesondere zu der Unterseite des Endbereichs des Wippenarms der zweiten Kontaktwippe 19a, 19b.

Bei dem nicht dargestellten Nullkontakt wird keine Kontaktierung von dem Kontaktelement zu einer Kontaktwippe 19a, 19b hergestellt.

Bei den als Steckklemmen ausgebildeten Kontaktelementen 11a, 11b, 11c umfasst ein Kontaktelement 11a, 11b, 11c jeweils eine Sperre 12. Die Sperre 12 ist derart ausgebildet und in dem Kontaktelement 11a, 11b, 11c angeordnet, dass sie den durch die Einführöffnung eingesteckten Endabschnitt des elektrischen Leiters in dem Kontaktelemente 11a, 11b, 11c an einer Innenwand des Kontaktelementes 11a, 11b, 11c festklemmt. Insbesondere ist die Sperre 12 in dem Grundkörper des Kontaktelementes 11a, 11b, 11c angeordnet. Vorteilhafterweise ist die Sperre 12 als federelastisches, V-förmiges Stanzbiegeteil aus Metall ausgebildet.

Jedes Kontaktelement 11a, 11b, 11c ist jeweils in einer Kontaktaufnahme 13 des Sockelunterteils 4a, 4b, 4c, 4d angeordnet. Die Kontaktaufnahmen 13 sind vorteilhafterweise einstückig als Vertiefungen des Sockelunterteils 4a, 4b, 4c, 4d ausgebildet. Die Innenkontur der Kontaktaufnahmen 13 ist insbesondere an die Außenform des Grundkörpers der Kontaktelemente 11a, 11b, 11c angepasst. Die Kontaktaufnahmen 13 sind vorteilhafterweise derart ausgebildet, dass die Kontaktelemente 11a, 11b, 11c umfangsgemäß spielfrei in die Kontaktaufnahmen 13 durch eine Aufnahmeöffnung einsetzbar sind. Die Aufnahmeöffnung der Kontaktaufnahmen 13 zum Einsetzen der Kontaktelemente 11a, 11b, 11c ist in Richtung des Sockeloberteils 3a, 3b angeordnet. Die Kontaktaufnahmen 13 weisen in ihrem der Aufnahmeöffnung gegenüberliegenden Boden ebenfalls eine Einführöffnung zum Einführen des Endabschnittes des elektrischen Leiters auf. Die Kontaktaufnahmen 13 und die Kontaktelemente 11a, 11b, 11c sind derart ausgebildet, dass im eingesetzten Zustand der Kontaktelemente 11a, 11b, 11c die beiden jeweiligen Einführöffnungen des Kontaktelementes 11a, 11b, 11c und der Kontaktaufnahme 13 fluchtend angeordnet sind. Dabei sind die Kontaktelemente 11a, 11b, 11c und die Kontaktaufnahmen 13 derart angeordnet und ausgebildet, dass der Einsteckwinkel in einem Bereich von 0° bis 45° entgegengesetzt zur Montagerichtung Z-Z' liegt.

Die Kontaktaufnahmen 13 sind in dem Sockelunterteil 4a, 4b, 4c, 4d in zwei zueinander parallel verlaufenden und zueinander fluchtenden Reihen in einer ersten, senkrecht zur Montagerichtung Z-Z' verlaufenden Kontaktebene K1 angeordnet.

Das Sockelunterteil 4a, 4b, 4c, 4d weist mindestens eine Wippenaufnahme 22 zur Aufnahme von Kontaktwippen 19a, 19b auf. Die Wippenaufnahmen 22 sind vorteilhafterweise einstückig als Vertiefungen des Sockelunterteils 4a, 4b, 4c, 4d ausgebildet. In mindestens einer Wippenaufnahme 22 ist eine Kontaktwippe 19a, 19b angeordnet. Je nach Schaltertyp können auch zwei oder drei Kontaktwippen 19a, 19b in dem Sockelunterteil 4a, 4b, 4c, 4d parallel zueinander jeweils in unterschiedlichen Wippenaufnahmen 22 angeordnet sein.

Die Wippenaufnahme 22 ist in der ersten Kontaktebene K1 des Sockelunterteils 4a, 4b, 4c, 4d zwischen zwei sich in unterschiedlichen Reihen gerade gegenüberliegend angeordneten Kontaktaufnahmen 13 angeordnet. Die Wippenaufnahme 22 weist ein Wippenlager 18 zur beweglichen Lagerung der Kontaktwippe 19a, 19b auf. Das Wippenlager 18 ist insbesondere derart ausgebildet, dass die Schwenkachse der eingesetzten Kontaktwippe 19a, 19b in einer senkrecht zur Montagerichtung Z-Z' und parallel zur Montageebene verlaufenden Ebene verläuft. Die Kontaktewippe 19a, 19b ist insbesondere derart ausgebildet, dass sie mindestens in einem ihrer beiden Schaltzustände zwei Kontaktarme 15a, 15b, 15c zweier verschiedener Kontaktelemente 11a, 11b, 11c miteinander kontaktiert.

Die in einer Reihe angeordneten Kontaktaufnahmen 13 weisen einen Rasterabstand A1 von den jeweiligen parallelen Mittelsenkrechten zueinander auf, der derart bemessen ist, dass drei Kontaktaufnahmen 13 in einer Reihe nebeneinander in dem Sockelunterteil 4a, 4b, 4c, 4d anordbar sind, wobei der Rasterabstand A1 insbesondere mindestens so groß gewählt ist, dass eine ausreichende elektrische Isolierung bei einer Spannung bis 250 V und einem Strom bis zu 16 A durch ausreichende Luftstrecken und/oder Kriechstrecken zwischen zwei benachbarten, in den jeweiligen Kontaktaufnahmen 13 angeordneten, Kontaktelementen 11a, 11b, 11c vorhanden ist. Insbesondere ist der seitliche Abstand zwischen den benachbarten Außenseiten zweier Kontaktaufnahmen 13 mindestens 3 mm. Dadurch ist gewährleistet, dass der Rasterabstand A1 bei Sockelunterteilen 4a, 4c mit Zweier-Reihen und bei Sockelunterteilen 4b, 4d mit Dreier-Reihen gleich groß ist, wobei der Außenumfang der Sockelunterteile 4a, 4b, 4c, 4d derart bemessen ist, dass sie in eine genormte Hohlwanddose oder Unterputzdose für die Montage in einer Wand einsetzbar sind.

Die beiden Reihen in der ersten Kontaktebene K1 weisen einen Reihenabstand A2 zueinander auf, der derart bemessen ist, dass zwischen den beiden Reihen mindestens eine dritte, parallele und mit den anderen Reihen fluchtende Reihe in einer zweiten, parallel in Montagerichtung Z-Z' hinter der ersten Kontaktebene K1 liegenden Kontaktebene K2 anordbar ist, wobei sich die Kontaktaufnahmen 13 der drei Reihen in einer in Montagerichtung Z-Z' aufeinander projizierten Ebene nicht überdecken. Dadurch ist gewährleistet, dass die elektrischen Leiter alle parallel zueinander in gleicher Richtung in das Sockelunterteil 4a, 4b, 4c, 4d eingesteckt werden können. Insbesondere ist der Reihenabstand A2 bei Sockelteilen mit zwei parallelen Reihen und bei Sockelteilen mit drei parallelen Reihen gleich groß.

Eine derartige Wahl des Rasterabstandes A1 und des Reihenabstandes A2 ermöglicht die Verwendung der gleichen Kontaktelemente 11a, 11b, 11c und der gleichen Kontaktwippen 19a, 19b für verschiedene Sockelunterteile 4a, 4b, 4c, 4d und bei verschiedenen Schaltertypen, insbesondere bei Sockelunterteilen 4a, 4c mit Zweier-Reihen (z. B. für 2-fach Schalter) und bei Sockelunterteilen 4b, 4d mit Dreier-Reihen (z. B. für 3-fach Schalter) beziehungsweise Sockelunterteilen 4a, 4b mit zwei Reihen (für Schalter bis zu 4 Kontakten oder für bis zu 6 Kontakten) oder Sockelunterteilen 4c, 4d mit drei Reihen (für Schalter bis zu 6 Kontakten oder für bis zu 9 Kontakten).

Dabei ist der Rasterabstand und/oder der Reihenabstand insbesondere derart gewählt, dass die Sockelunterteile in bestimmte vorgegebene Montageöffnungen und Hohlwanddosen, insbesondere gemäß der DIN Norm 49073-3 passen.

Vorteilhafterweise ist in der der Wippenaufnahme 22 zugewandten Seitenwand der Kontaktaufnahmen 13 ein Kontaktfenster 23 zur Durchführung des Kontaktarmes 15a, 15b, 15c eines Kontaktelementes 11a, 11b, 11c angeordnet. Insbesondere ist zwischen zwei benachbarten Wippenaufnahmen 22 ein Verbindungsfenster 24 zur Durchführung des Kontaktarmes 15c eines als Wechselkontakt oder Serienkontakt ausgebildeten Kontaktelementes 11c angeordnet. Die Wippenaufnahme 22 weist in ihrem Boden eine Erweiterungsöffnung 20 zur Kontaktierung der Kontaktwippe 19a, 19b auf.

Bei den dargestellten Ausführungsformen mit Kontaktelementen 11a, 11b, 11c als Steckklemmen ist an dem Außenumfang jeder Kontaktaufnahme 13 jeweils ein Lösehebel 14 angeordnet. Der Lösehebel 14 ist insbesondere durch ein angeformtes Filmscharnier mit dem Rand der Kontaktaufnahme 13 verbunden. Der Lösehebel 14 ist derart beweglich mit der Kontaktaufnahme 13 verbunden, dass er mittels eines Lösepinns durch eine Löseöffnung der Kontaktaufnahme 13 stößt und dabei die Sperre 12 derart zusammendrückt, dass die Sperre 12 ein Einstecken des Endabschnitts des Leiters durch die Einführöffnungen ermöglicht beziehungsweise einen festgeklemmten Endabschnitt des Leiter freigibt. Die Löseöffnung der jeweiligen Kontaktaufnahme 13 ist in einer außenliegenden Seitenwand des Sockelunterteils 4a, 4b, 4c, 4d ausgebildet.

Bei der nicht dargestellten alternativen Ausführungsform der Kontaktelemente als Schraubklemme sind die Kontaktelemente als U-förmige Profile ausgebildet. Dabei umfassen die Kontaktelemente eine Schraube und eine in dem Kontaktelement mittels der Schraube verschiebbare Klemmscheibe. Dabei ist das Kontaktelement derart in der Kontaktaufnahme angeordnet, dass die Schraube aus der Löseöffnung herausragt und von außen betätigbar ist, so dass ein eingesteckter Endabschnitt eines Leiters mittels der Klemmscheibe festklemmbar ist. In diesem Fall weisen die Kontaktaufnahmen keine Lösehebel auf.

Das Sockelunterteil 4a, 4b, 4c, 4d weist an seiner dem Sockeloberteil 3a, 3b abweisenden Seite Befestigungsmittel 25, insbesondere Rastmittel, für eine Verbindung mit einer Sockelerweiterung 21a, 21b auf.

In einer vorteilhaften Ausführungsform ist das Sockelunterteil 4a, 4b, 4c, 4d an seiner von dem Sockeloberteil 3a, 3b abweisenden Seite im Bereich der Wippenaufnahme 22 mit der Sockelerweiterung 21a, 21b lösbar verbunden. Die Sockelerweiterung 21a, 21b weist in einer parallel zur ersten Kontaktebene K1 verlaufenden zweiten Kontaktebene K2 eine dritte Reihe von Kontaktaufnahmen 13 auf. Dabei sind in der Sockelerweiterung 21a, 21b eine gleiche Anzahl von Kontaktaufnahmen 13 wie in den zwei Reihen des Sockelunterteils 4a, 4b, 4c, 4d mit dem gleichen Rasterabstand A1 wie in den Reihen des Sockelunterteils 4a, 4b, 4c, 4d angeordnet. Die Kontaktaufnahmen 13 der Sockelerweiterung 21a, 21b sind insbesondere als Vertiefungen in der Sockelerweiterung 21a, 21b ausgebildet. Die Kontaktaufnahmen 13 der Sockelerweiterung 21a, 21b sind in Richtung zum Sockelunterteil 4a, 4b, 4c, 4d geöffnet. Die Sockelerweiterung 21a, 21b ist insbesondere aus einem nicht elektrisch leitenden Material ausgebildet.

Die Sockelerweiterung 21a, 21b weist mindestens ein Kontaktelement auf, wobei der Kontaktarm des Kontaktelementes der Sockelerweiterung 21a, 21b durch die Erweiterungsöffnung 20 des Sockelunterteils 4a, 4b, 4c, 4d in die Wippenaufnahme 22 zur Kontaktierung mit der Kontaktwippe 19b ragt. Die Kontaktelemente sind insbesondere als nicht dargestellte Erweiterungskontakte ausgebildet.

Bei dem Erweiterungskontakt wird die Kontaktwippe 19a, 19b derart kontaktiert, dass der Kontaktarm des Kontaktelementes unabhängig von dem Schaltzustand immer mit der Kontaktwippe 19a, 19b kontaktiert ist. Dazu verläuft der Kontaktarm insbesondere vom Kontaktelement durch die Erweiterungsöffnung 20 des Sockelunterteils 21a, 21b zum Drehpunkt beziehungsweise Scheitelpunkt der Kontaktwippe 19b. Die Kontaktelemente sind derart in der Sockelerweiterung 21a, 21b ausgebildet, dass die Endabschnitte der elektrischen Leiter in einer Richtung entgegengesetzt zu der Montagerichtung Z-Z' in die Kontaktelemente einführbar sind. Dabei sind die Kontaktelemente und die Kontaktaufnahmen der Sockelerweiterung 21a, 21b derart angeordnet und ausgebildet, dass der Einsteckwinkel in einem Bereich von 0° bis 45° entgegengesetzt zur Montagerichtung Z-Z' liegt. Insbesondere kontaktiert das Kontaktelement der Sockelerweiterung 21a, 21b dauerhaft die Kontaktwippe 19b unabhängig vom Schaltzustand.

Durch die Sockelerweiterung 21a, 21b können mit einer Schaltervorrichtung besonders aufwendige Schaltertypen mit bis zu einer Konfiguration mit 9 Kontakten, wie zum Beispiel ein 3-fach Wechsel-Wechsel-Schalter oder ein 6-fach Taster, realisiert werden.

Zur Betätigung der Schaltervorrichtung wird eine Schaltbewegung von dem Betätigungselement 8 über die Schaltwippe 5a, 5b auf die in Montagerichtung Z-Z' hinter der Schaltwippe 5a, 5b angeordnete Kontaktwippe 19a, 19b im Sockelunterteil 4a, 4b, 4c, 4d übertragen.

Erfindungsgemäß sind zwei, vier oder sechs Kontaktaufnahmen 13 an dem Sockelunterteil 4a, 4b, 4c, 4d angeordnet. Der Abstand zwischen zwei benachbarten Kontaktaufnahmen 13 ist unabhängig von der Anzahl der vorhandenen Kontaktaufnahmen 13, der verwendeten Kontaktelemente und der verwendeten Kontaktwippen 19a, 19b immer gleich. Zudem ist der Grundkörper der Kontaktelemente 11a, 11b, 11c und damit die Größe der Kontaktaufnahmen 13 unabhängig von der zu erzielenden Verschaltung oder der Anzahl der Kontaktelemente 11a, 11b, 11c und insbesondere unabhängig von der Ausgestaltung der Kontaktarme 15 immer gleich. Außerdem ist die Lagerung der Kontaktwippen 19a, 19b zwischen zwei sich paarweise gegenüberliegenden Kontaktaufnahmen 13 immer gleich angeordnet und unabhängig von der Anzahl der verwendeten Kontaktwippen 19.

### Bezugszeichenliste

- 2: Tragring
- 3a, 3b: Sockeloberteil
- 4a,4b,4c,4d: Sockelunterteil
- 5a,5b: Schaltwippe
- 6: Klemmstück
- 7: Rahmen
- 8: Betätigungselement
- 9: Verbindungsmittel
- 10: Krallenaufnahme
- 11a,11b,11c: Kontaktelement
- 12: Sperre
- 13: Kontaktaufnahme
- 14: Lösehebel
- 15a,15b,15c: Kontaktarm
- 18: Wippenlager
- 19a,19b: Kontaktwippe
- 20: Erweiterungsöffnung
- 21a, 21b: Sockelerweiterung
- 22: Wippenaufnahme
- 23: Kontaktfenster
- 24: Verbindungsfenster
- 25: Befestigungsmittel
- 30: Lagermittel
- 31: Schaltarm
- 32: Umwerferaufnahme
- 33: Umwerfer
- 34: Federhülse
- 35: Schaltschwinge
- K1: erste Kontaktebene
- K2: zweite Kontaktebene
- A1: Rasterabstand
- A2: Reihenabstand

## Patentansprüche

1. Sockelteil für eine elektrische Schaltervorrichtung zur Montage in einer Montageebene einer Montageöffnung oder eines Tragrings, umfassend ein Sockeloberteil (3a, 3b) und ein Sockelunterteil (4a, 4b, 4c, 4d), mindestens zwei elektrisch leitende, als Steckklemmen ausgebildete Kontaktelemente (11a, 11b, 11c) zum Anschließen jeweils eines Endabschnitts eines elektrischen Leiters, mindestens eine Schaltwippe (5a, 5b) zur Erzeugung einer mechanischen Schaltbewegung und mindestens eine Kontaktwippe (19a, 19b) zur elektrischen Kontaktierung der Kontaktelemente (11a, 11b, 11c), wobei Sockeloberteil (3a, 3b) und Sockelunterteil (4a, 4b, 4c, 4d) miteinander lösbar verbunden sind, und wobei mittels der Schaltwippe (5a, 5b) die Kontaktwippe (19a, 19b) zwischen einem ersten und einem zweiten Schaltzustand umschaltbar ist, wobei die Schaltwippe (5a, 5b) in dem Sockeloberteil (3a, 3b) angeordnet ist, und wobei die Kontaktwippe (19a, 19b) derart mittels eines Wippenlagers (18) in dem Sockelunterteil (4a, 4b, 4c, 4d) schwenkbar gelagert ist, dass ihre Schwenkachse in einer senkrecht zu der Montagerichtung (Z-Z') und parallel zu der Montageebene verlaufenden Ebene verläuft, wobei Kontaktaufnahmen (13) in dem Sockelunterteil (4a, 4b, 4c, 4d) in einem Raster in mindestens zwei zueinander parallel verlaufenden und zueinander fluchtenden Reihen in einer ersten, senkrecht zur Montagerichtung (Z-Z') verlaufenden Kontaktebene (K1) angeordnet sind, und wobei die in einer Reihe angeordneten Kontaktaufnahmen (13) einen Rasterabstand (A1) aufweisen, der derart bemessen ist, dass drei Kontaktaufnahmen (13) in einer Reihe nebeneinander in dem Sockelunterteil (4a, 4b, 4c, 4d) anordbar sind, **dadurch gekennzeichnet, dass** die Kontaktelemente (11a, 11b, 11c) derart in dem Sockelunterteil (4a, 4b, 4c, 4d) ausgebildet und angeordnet sind, dass die Endabschnitte der elektrischen Leiter mit einem Einsteckwinkel in einem Bereich von 0° bis 45° in einer Richtung entgegengesetzt zu einer Montagerichtung Z-Z' in die Kontaktelemente (11a, 11b, 11c) einführbar sind.

2. Sockelteil nach Anspruch 1,
**dadurch gekennzeichnet, dass**
der Rasterabstand (A1) insbesondere mindestens so groß gewählt ist, dass eine ausreichende elektrische Isolierung zwischen zwei benachbarten Kontaktelementen (11a, 11b, 11c) vorhanden ist.

3. Sockelteil nach Anspruch 1 oder 2,
**dadurch gekennzeichnet, dass**
die beiden Reihen in der ersten Kontaktebene (K1) einen Reihenabstand (A2) zueinander aufweisen, der derart bemessen ist, dass zwischen den beiden Reihen mindestens eine dritte, parallele und mit den anderen Reihen fluchtende Reihe in einer parallel in Montagerichtung (Z-Z') hinter der ersten Kontaktebene (K1) liegenden zweiten Kontaktebene (K2) anordbar ist, wobei sich die Kontaktaufnahmen (13) der drei Reihen in einer in Montageachtung (Z-Z') aufeinander projizierten Ebene nicht überdecken.

4. Sockelteil nach einem der Ansprüche 1 bis 3,
**dadurch gekennzeichnet, dass**
in der ersten Kontaktebene (K1) des Sockelunterteils (4a, 4b, 4c, 4d) jeweils zwischen zwei sich in unterschiedlichen Reihen gerade gegenüberliegend angeordneten Kontaktaufnahmen (13) eine Wippenaufnahme (22) angeordnet ist, wobei die Wippenaufnahme (22) ein Wippenlager (18) für die Kontaktwippe (19a, 19b) aufweist.

5. Sockelteil nach Anspruch 4,
**dadurch gekennzeichnet, dass**
in jeder Kontaktaufnahme (13) in der der Wippenaufnahme (22) zugewandten Seitenwand ein Kontaktfenster (23) zur Durchführung eines Kontaktarmes (15) eines Kontaktelementes **(11** a, 11b, 11c) angeordnet ist.

6. Sockelteil nach Anspruch 4 oder 5,
**dadurch gekennzeichnet, dass**
zwischen zwei benachbarten Wippenaufnahmen (22) ein Verbindungsfenster (24) zur Durchführung eines Kontaktarmes (15) eines Kontaktelementes (11a, 11b, 11c) angeordnet ist.

7. Sockelteil nach einem der Ansprüche 4 bis 6,
**dadurch gekennzeichnet, dass**
die Wippenaufnahme (22) in ihrem Boden eine Erweiterungsöffnung (20) zur Kontaktierung der Kontaktwippe (19a, 19b) aufweist.

8. Sockelteil nach einem der Ansprüche 1 bis 7,
**dadurch gekennzeichnet, dass**
das Sockelunterteil (4a, 4b, 4c, 4d) an seiner dem Sockeloberteil (3a, 3b) abweisenden Seite Befestigungsmittel für eine Verbindung mit einer Sockelerweiterung (21a, 21b) aufweist.

9. Sockelteil nach einem der Ansprüche 4 bis 8,
**dadurch gekennzeichnet, dass**
das Sockelunterteil (4a, 4b, 4c, 4d) an seiner von dem Sockeloberteil (3a, 3b) abweisenden Seite im Bereich der Wippenaufnahme (22) mit einer Sockelerweiterung (21a, 21b) lösbar verbunden ist.

10. Sockelteil nach Anspruch 9,
**dadurch gekennzeichnet, dass**
die Sockelerweiterung (21a, 21b) in einer zweiten, parallel zur ersten Kontaktebene (K1) verlaufenden Kontaktebene (K2) eine dritte Reihe von Kontaktaufnahmen (13) aufweist.

11. Sockelteil nach Anspruch 10,
**dadurch gekennzeichnet, dass**
eine gleiche Anzahl von Kontaktaufnahmen (13) wie in den zwei Reihen des Sockelunterteils (4a, 4b, 4c, 4d) mit dem gleichen Rasterabstand (A1) wie in den Reihen des Sockelunterteils (4a, 4b, 4c, 4d) in der Sockelerweiterung (21a, 21b) angeordnet ist.

12. Sockelteil nach einem der Ansprüche 10 bis 11,
**dadurch gekennzeichnet, dass**
dass die Kontaktaufnahmen (13) der Sockelerweiterung (21a, 21b) in Richtung zum Sockelunterteil (4a, 4b, 4c, 4d) geöffnet sind.

13. Sockelteil nach einem der Ansprüche 9 bis 12,
**dadurch gekennzeichnet, dass**
die Sockelerweiterung (21a, 21b) mindestens ein Kontaktelement (11a, 11b, 11c) aufweist, wobei der Kontaktarm (15) des Kontaktelementes (11a, 11b, 11c) der Sockelerweiterung (21a, 21b) durch die Erweiterungsöffnung (20) des Sockelunterteils (4a, 4b, 4c, 4d) in die Wippenaufnahme (22) zur Kontaktierung mit der Kontaktwippe (19a, 19b) ragt.

14. Sockelteil nach Anspruch 13,
**dadurch gekennzeichnet, dass**
das Kontaktelement (11a, 11b, 11c) der Sockelerweiterung (21a, 21b) unabhängig vom Schaltzustand dauerhaft die Kontaktwippe (19a, 19b) kontaktiert.

15. Sockelteil nach einem der Ansprüche 9 bis 14,
**dadurch gekennzeichnet, dass**
die Kontaktelemente (11a, 11b, 11c) derart in der Sockelerweiterung (21a, 21b) ausgebildet sind, dass die Endabschnitte der elektrischen Leiter in einer Richtung entgegengesetzt zu einer Montagerichtung (Z-Z') in die Kontaktelemente (11a, 11b, 11c) einführbar sind.

16. Sockelteil nach einem der Ansprüche 1 bis 15,
**dadurch gekennzeichnet, dass**
alle Kontaktelemente (11a, 11b, 11c) einen gleich ausgebildeten Grundkörper aufweisen, der jeweils in die Kontaktaufnahmen (13) einsetzbar ist.

17. Sockelteil nach einem der Ansprüche 1 bis 16,
**dadurch gekennzeichnet, dass**
am Sockelunterteil (4a, 4b, 4c, 4d) Krallen-Lagerungen zur Aufnahme von Schraub-Krallen zur Montage in einer Unterputz-Dose oder Hohlwand-Dose ausgebildet sind.

18. Sockelteil nach einem der Ansprüche 1 bis 17,
**dadurch gekennzeichnet, dass**
am Sockelunterteil (4a, 4b, 4c, 4d) Rastmittel zur Montage in einem Tragring ausgebildet sind.

19. Sockelteil nach einem der Ansprüche 1 bis 18,
**dadurch gekennzeichnet, dass**
das Sockeloberteil (3a, 3b) Lagermittel (30) für mindestens eine Schaltwippe (5) und eine Betätigungsöffnung für jede Schaltwippe (5) zur mechanischen Verbindung der Schaltwippe (5) mit der Kontaktwippe (19a, 19b) im Sockelunterteil (4a, 4b, 4c, 4d) aufweist.

20. Sockelteil nach Anspruch 19,
**dadurch gekennzeichnet, dass**
die Lagermittel (30) des Sockeloberteils (3a, 3b) derart ausgebildet und angeordnet sind, dass jede Schaltwippe (5) eine zugeordnete Kontaktwippe (19a, 19b) im Sockelunterteil (4a, 4b, 4c, 4d) zwischen ihrem ersten Schaltzustand und ihrem zweiten Schaltzustand hin und her bewegt.

21. Elektrische Schaltervorrichtung, umfassend ein Sockelteil nach einem der Ansprüche 1 bis 20 und mindestens ein Betätigungselement (8) zum Betätigen der Schaltwippe (5a, 5b) des Sockelteils.

## Claims

1. Base section for an electrical switching device for mounting in a mounting plane of a mounting opening or of a supporting ring, comprising an upper base section (3a, 3b) and a lower base section (4a, 4b, 4c, 4d), at least two electrically conducting contact elements (11a, 11b, 11c), formed as plug-in terminals, for connecting in each case an end portion of an electrical conductor, at least one switching rocker (5a, 5b) for producing a mechanical switching movement and at least one contact rocker (19a, 19b) for electrically contacting the contact elements (11a, 11b, 11c), wherein the upper base section (3a, 3b) and the lower base section (4a, 4b, 4c, 4d) are detachably connected to one another, and wherein the contact rocker (19a, 19b) can be switched over by means of the switching rocker (5a, 5b) between a first switching state and a second switching state, wherein the switching rocker (5a, 5b) is arranged in the upper base section (3a, 3b), and wherein the contact rocker (19a, 19b) is pivotably mounted in the lower base section (4a, 4b, 4c, 4d) by means of a rocker bearing (18) in such a way that its pivot axis runs in a plane extending perpendicular to the mounting direction (Z-Z') and parallel to the mounting plane, wherein contact receptacles (13) in the lower base section (4a, 4b, 4c, 4d) are arranged in at least two rows running parallel to one another and in line with one another in a grid in a first contact plane (K1) extending perpendicular to the mounting direction (Z-Z'), and wherein the contact receptacles (13) arranged in a row have a grid spacing (A1) which is dimensioned in such a way that three contact receptacles (13) can be arranged in a row next to one another in the lower base section (4a, 4b, 4c, 4d),
**characterized in that** the contact elements (11a, 11b, 11c) are formed and arranged in the lower base section (4a, 4b, 4c, 4d) in such a way that the end portions of the electrical conductors can be inserted into the contact elements (11a, 11b, 11c) with an insertion angle in the range from 0° to 45° in a direction opposite to a mounting direction Z-Z'.

2. Base section according to Claim 1,
**characterized in that**
the grid spacing (A1) is chosen in particular to be at least of such a size that there is sufficient electrical insulation between two neighbouring contact elements (11a, 11b, 11c).

3. Base section according to Claim 1 or 2,
**characterized in that**
the two rows in the first contact plane (K1) have a row spacing (A2) in relation to one another which is dimensioned in such a way that at least a third row that is parallel and in line with the other rows can be arranged between the two rows, in a second contact plane (K2) lying parallel after the first contact plane (K1) in the mounting direction (Z-Z'), wherein the contact receptacles (13) of the three rows are not congruent with one another in a plane projected onto one another in the mounting direction (Z-Z').

4. Base section according to one of Claims 1 to 3,
**characterized in that**
in the first contact plane (K1) of the lower base section (4a, 4b, 4c, 4d), a rocker receptacle (22) is respectively arranged between two contact receptacles (13) that are arranged right opposite in different rows, the rocker receptacle (22) having a rocker bearing (18) for the contact rocker (19a, 19b).

5. Base section according to Claim 4,
**characterized in that**
in each contact receptacle (13), a contact window (23) for leading through a contact arm (15) of a contact element (11a, 11b, 11c) is arranged in the side wall facing the rocker receptacle (22).

6. Base section according to Claim 4 or 5,
**characterized in that**
a connecting window (24) for leading through a contact arm (15) of a contact element (11a, 11b, 11c) is arranged between two neighbouring rocker receptacles (22).

7. Base section according to one of Claims 4 to 6,
**characterized in that**
the rocker receptacle (22) has in its base a widening opening (20) for contacting the contact rocker (19a, 19b).

8. Base section according to one of Claims 1 to 7,
**characterized in that**
on its side facing away from the upper base section (3a, 3b), the lower base section (4a, 4b, 4c, 4d) has fastening means for connecting to a base widening (21a, 21b).

9. Base section according to one of Claims 4 to 8,
**characterized in that**
on its side facing away from the upper base section (3a, 3b), the lower base section (4a, 4b, 4c, 4d) is detachably connected to a base widening (21a, 21b) in the region of the rocker receptacle (22).

10. Base section according to Claim 9,
**characterized in that**
the base widening (21a, 21b) has a third row of contact receptacles (13) in a second contact plane (K2), extending parallel to the first contact plane (K1).

11. Base section according to Claim 10,
**characterized in that**
an equal number of contact receptacles (13) as in the two rows of the lower base section (4a, 4b, 4c, 4d) are arranged in the base widening (21a, 21b) with the same grid spacing (A1) as in the rows of the lower base section (4a, 4b, 4c, 4d).

12. Base section according to either of Claims 10 and 11,
**characterized in that**
the contact receptacles (13) of the base widening (21a, 21b) are open in the direction of the lower base section (4a, 4b, 4c, 4d).

13. Base section according to one of Claims 9 to 12,
**characterized in that**
the base widening (21a, 21b) has at least one contact element (11a, 11b, 11c), wherein the contact arm (15) of the contact element (11a, 11b, 11c) of the base widening (21a, 21b) protrudes through the widening opening (20) of the lower base section (4a, 4b, 4c, 4d) into the rocker receptacle (21) for contacting with the contact rocker (19a, 19b).

14. Base section according to Claim 13,
**characterized in that**
the contact element (11a, 11b, 11c) of the base widening (21a, 21b) permanently contacts the contact rocker (19a, 19b) irrespective of the switching state.

15. Base section according to one of Claims 9 to 14,
**characterized in that**
the contact elements (11a, 11b, 11c) are formed in the base widening (21a, 21b) in such a way that the end portions of the electrical conductors can be inserted into the contact elements (11a, 11b, 11c) in a direction opposite to a mounting direction (Z-Z').

16. Base section according to one of Claims 1 to 15,
**characterized in that**
all of the contact elements (11a, 11b, 11c) have a main body of the same form, which in each case can be inserted into the contact receptacles (13).

17. Base section according to one of Claims 1 to 16,
**characterized in that**
clamp mountings for receiving screw clamps are formed on the lower base section (4a, 4b, 4c, 4d) for mounting in a flush box or cavity wall socket.

18. Base section according to one of Claims 1 to 17,
**characterized in that**
latching means are formed on the lower base section (4a, 4b, 4c, 4d) for mounting in a supporting ring.

19. Base section according to one of Claims 1 to 18,
**characterized in that**
the upper base section (3a, 3b) has bearing means (30) for at least one switching rocker (5) and an actuating opening for each switching rocker (5) for mechanically connecting the switching rocker (5) to the contact rocker (19a, 19b) in the lower base section (4a, 4b, 4c, 4d).

20. Base section according to Claim 19,
**characterized in that**
the bearing means (30) of the upper base section (3a, 3b) are formed and arranged in such a way that each switching rocker (5) moves an assigned contact rocker (19a, 19b) in the lower base section (4a, 4b, 4c, 4d) back and forth between its first switching state and its second switching state.

21. Electrical switching device, comprising a base section according to one of Claims 1 to 20 and at least one actuating element (8) for actuating the switching rocker (5a, 5b) of the base section.

## Revendications

1. Pièce d'embase pour un dispositif commutateur électrique destinée à être montée dans un plan de montage d'une ouverture de montage ou d'un anneau porteur, comprenant une partie supérieure d'embase (3a, 3b) et une partie inférieure d'embase (4a, 4b, 4c, 4d), au moins deux éléments de contact (11a, 11b, 11c) électriquement conducteurs réalisés sous la forme de broches à enfichage destinées au raccordement respectif d'une portion d'extrémité d'un conducteur électrique, au moins une bascule de commutation (5a, 5b) destinée à produire un mouvement de commutation mécanique et au moins une bascule de contact (19a, 19b) destinée à la mise en contact électrique des éléments de contact (11a, 11b, 11c), la partie supérieure d'embase (3a, 3b) et la partie inférieure d'embase (4a, 4b, 4c, 4d) étant reliées ensemble de manière amovible, et une permutation de la bascule de contact (19a, 19b) entre un premier et un deuxième état de commutation pouvant être effectuée au moyen de la bascule de commutation (5a, 5b), la bascule de commutation (5a, 5b) étant disposée dans la partie supérieure d'embase (3a, 3b) et la bascule de contact (19a, 19b) étant montée pivotante dans la partie inférieure d'embase (4a, 4b, 4c, 4d) au moyen d'un palier de bascule (18) de telle sorte que son axe de pivotement s'étend dans un plan perpendiculaire à la direction de montage (Z-Z') et parallèle au plan de montage, des logements de contact (13) étant disposés dans la partie inférieure d'embase (4a, 4b, 4c, 4d) en une grille dans au moins deux rangées qui s'étendent mutuellement en parallèle et mutuellement affleurantes dans un premier plan de contact (K1) qui s'étend perpendiculairement à la direction de montage (Z-Z'), et les logements de contact (13) disposés dans une rangée possédant un pas de grille (A1) qui est dimensionné de telle sorte que trois logements de contact (13) peuvent être disposés les uns à côté des autres dans une rangée dans la partie inférieure d'embase (4a, 4b, 4c, 4d),
**caractérisée en ce que** les éléments de contact (11a, 11b, 11c) sont configurés et disposés dans la partie inférieure d'embase (4a, 4b, 4c, 4d) de telle sorte que les portions d'extrémité des conducteurs électriques peuvent être insérés dans les éléments de contact (11a, 11b, 11c) avec un angle d'enfichage dans une plage de 0° à 45° dans une direction à l'opposé d'une direction de montage (Z-Z').

2. Pièce d'embase selon la revendication 1, **caractérisée en ce que** le pas de grille (A1) est notamment choisi au moins assez grand pour qu'il existe une isolation électrique suffisante entre deux éléments de contact (11a, 11b, 11c) voisins.

3. Pièce d'embase selon la revendication 1 ou 2, **caractérisée en ce que** les deux rangées dans le premier plan de contact (K1) présentent entre elles un écart de rangée (A2) qui est dimensionné de telle sorte qu'entre les deux rangées peut être disposée au moins une troisième rangée, parallèle aux autres rangées et affleurante de celles-ci dans un deuxième plan de contact (K2) qui se trouve derrière le premier plan de contact (K1) parallèlement à la direction de montage (Z-Z'), les logements de contact (13) des trois rangées ne se recouvrant pas dans un plan se projetant l'un sur l'autre dans la direction de montage (Z-Z').

4. Pièce d'embase selon l'une des revendications 1 à 3,
**caractérisée en ce qu'**un logement de bascule (22) est disposé dans le premier plan de contact (K1) de la partie inférieure d'embase (4a, 4b, 4c, 4d), respectivement entre deux logements de contact (13) qui sont justement disposés opposés l'un à l'autre dans deux des rangées différentes, le logement de bascule (22) possédant un palier de bascule (18) pour la bascule de contact (19a, 19b).

5. Pièce d'embase selon la revendication 4, **caractérisée en ce que** dans chaque logement de contact (13), dans la paroi latérale faisant face au logement de bascule (22), est disposée une fenêtre de contact (23) servant au passage à travers celle-ci d'un bras de contact (15) d'un élément de contact (11a, 11b, 11c).

6. Pièce d'embase selon la revendication 4 ou 5, **caractérisée en ce qu'**une fenêtre de liaison (24) servant au passage à travers celle-ci d'un bras de contact (15) d'un élément de contact (11a, 11b, 11c) est disposée entre deux logements de bascule (22) voisins.

7. Pièce d'embase selon l'une des revendications 4 à 6,
**caractérisée en ce que** le logement de bascule (22) possède, dans son fond, une ouverture d'extension (20) destinée à la mise en contact de la bascule de contact (19a, 19b).

8. Pièce d'embase selon l'une des revendications 1 à 7,
**caractérisée en ce que** la partie inférieure d'embase (4a, 4b, 4c, 4d) possède, sur son côté à l'opposé de la partie supérieure d'embase (3a, 3b), des moyens de fixation pour une liaison avec une extension d'embase (21a, 21b).

9. Pièce d'embase selon l'une des revendications 4 à 8,
**caractérisée en ce que** la partie inférieure d'embase (4a, 4b, 4c, 4d) est reliée de manière amovible à une extension d'embase (21a, 21b) sur son côté à l'opposé de la partie supérieure d'embase (3a, 3b), dans la zone du logement de bascule (22).

10. Pièce d'embase selon la revendication 9, **caractérisée en ce que** l'extension d'embase (21a, 21b) possède une troisième rangée de logements de contact (13) dans un deuxième plan de contact (K2) qui s'étend parallèlement au premier plan de contact (K1).

11. Pièce d'embase selon la revendication 10, **caractérisée en ce qu'**un même nombre de logements de contact (13) que dans les deux rangées de la partie inférieure d'embase (4a, 4b, 4c, 4d) sont disposés dans l'extension d'embase (21a, 21b) avec le même pas de grille (A1) que dans les rangées de la partie inférieure d'embase (4a, 4b, 4c, 4d).

12. Pièce d'embase selon l'une des revendications 10 à 11,
**caractérisée en ce que** les logements de contact (13) de l'extension d'embase (21a, 21b) sont ouverts en direction de la partie inférieure d'embase (4a, 4b, 4c, 4d).

13. Pièce d'embase selon l'une des revendications 9 à 12,
**caractérisée en ce que** l'extension d'embase (21a, 21b) possède au moins un élément de contact (11a, 11b, 11c), le bras de contact (15) de l'élément de contact (11a, 11b, 11c) de l'extension d'embase (21a, 21b) faisant saillie dans le logement de bascule (22) à travers l'ouverture d'extension (20) de la partie inférieure d'embase (4a, 4b, 4c, 4d) en vue d'entrer en contact avec la bascule de contact (19a, 19b).

14. Pièce d'embase selon la revendication 13, **caractérisée en ce que** l'élément de contact (11a, 11b, 11c) de l'extension d'embase (21a, 21b) entre en contact de manière permanente avec la bascule de contact (19a, 19b) indépendamment de l'état de commutation.

15. Pièce d'embase selon l'une des revendications 9 à 14,
**caractérisée en ce que** les éléments de contact (11a, 11b, 11c) dans l'extension d'embase (21a, 21b) sont configurés de telle sorte que les portions d'extrémité des conducteurs électriques peuvent être insérées dans les éléments de contact (11a, 11b, 11c) dans une direction opposée à une direction de montage (Z-Z').

16. Pièce d'embase selon l'une des revendications 1 à 15,
**caractérisée en ce que** tous les éléments de contact (11a, 11b, 11c) possèdent un corps de base de configuration identique qui peut respectivement être introduit dans les logements de contact (13).

17. Pièce d'embase selon l'une des revendications 1 à 16,
**caractérisée en ce que** des supports à griffes destinés à accueillir des griffes à vis servant au montage dans une boîte à encastrer ou une boîte pour cloison creuse sont formés sur la partie inférieure d'embase (4a, 4b, 4c, 4d).

18. Pièce d'embase selon l'une des revendications 1 à 17,
**caractérisée en ce que** des moyens d'encliquetage servant au montage sur un anneau porteur sont formés sur la partie inférieure d'embase (4a, 4b, 4c, 4d).

19. Pièce d'embase selon l'une des revendications 1 à 18,
**caractérisée en ce que** la partie supérieure d'embase (3a, 3b) possède des moyens supports (30) pour au moins une bascule de commutation (5) et une ouverture d'actionnement pour chaque bascule de commutation (5) destinée à relier mécaniquement la bascule de commutation (5) à la bascule de contact (19a, 19b) dans la partie inférieure d'embase (4a, 4b, 4c, 4d).

20. Pièce d'embase selon la revendication 19, **caractérisée en ce que** les moyens supports (30) de la partie supérieure d'embase (3a, 3b) sont configurés et disposés de telle sorte que chaque bascule de commutation (5) fait effectuer un mouvement de va-et-vient à une bascule de contact (19a, 19b) associée dans la partie inférieure d'embase (4a, 4b, 4c, 4d) entre son premier état de commutation et son deuxième état de commutation.

21. Dispositif commutateur électrique, comprenant une pièce d'embase selon l'une des revendications 1 à 20 et au moins un élément d'actionnement (8) destiné à actionner la bascule de commutation (5a, 5b) de la pièce d'embase.
